# EUROPEAN PATENT SPECIFICATION

(11) **EP 0 902 593 B1**
(45) Date of publication and mention of the grant of the patent: **08.11.2006**
(21) Application number: 97307094.9
(22) Date of filing: 12.09.1997
(51) Int. Cl.: H04N 7/50, H04N 7/64

(54) **Video coder, decoder and transmission system**
Videokodierer, -dekodierer und Übertragungssystem
Codeur et décodeur vidéo, et système de transmission correspondant

(43) Date of publication of application: 17.03.1999
(73) Proprietor: Oki Electric Industry Co., Ltd., Tokyo (JP)
(72) Inventor: Fukunaga, Shigeru, 7-12, Toranomon 1-chome, Minato-ku Tokyo (JP); Nakai, Toshihisa, 7-12, Toranomon 1-chome, Minato-ku Tokyo (JP)
(74) Representative: Read, Matthew Charles

(56) References cited:
- EP-A- 0 763 944
- WO-A-95/30309
- US-A- 4 422 171
- US-A- 4 901 313
- US-A- 5 414 717
- US-A- 5 457 808
- US-A- 5 528 284

## Description

### BACKGROUND OF THE INVENTION

### 1. Field of the invention

The present invention relates to a picture transmission system, picture coder, and picture decoder, and more particularly to the prevention of picture quality degradation caused by frame dropouts or frame skipping.

### 2. Description of the prior art

Recently, there has been a proliferation of transmission systems that transmit picture signals over networks: examples include videotelephone, videoconferencing, and video-on-demand (VOD). To keep pace with the technical advances, standardization of the picture coding method is now in progress.

The picture coding method is classified into two: one is a coding method that employs both intra-frame coding and inter-frame coding and the other is a coding method that employs only intra-frame coding.

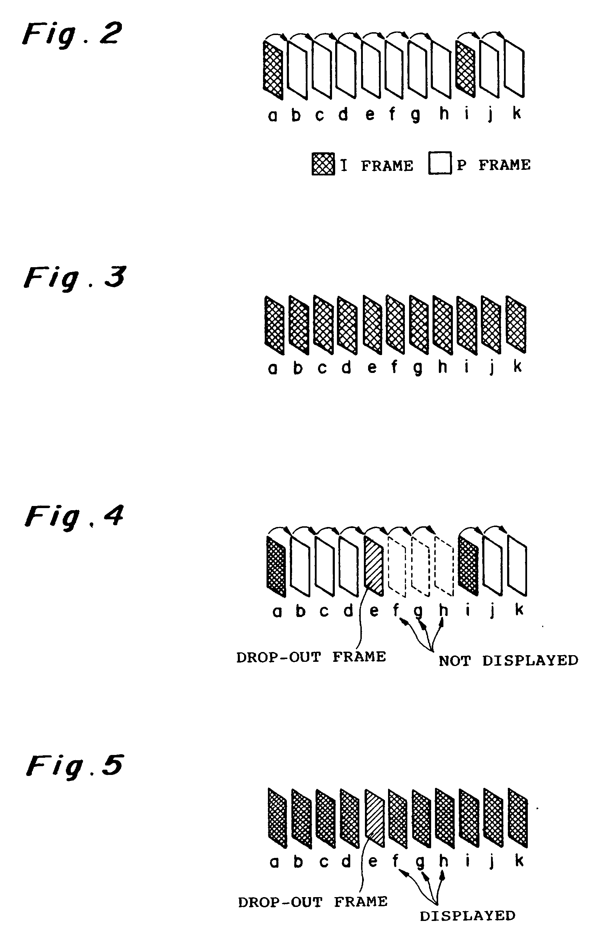

The method that employs both intra- and inter-frame coding has been used as a moving-picture communication/accumulation coding method proposed by the ITU-T Recommendation H.261 and Moving Picture Experts Group (MPEG). Fig. 2 is an example of frames arranged in time sequence. The coding method adopted by the ITU-T Recommendation H.261, shown in Fig. 2, performs intra-frame coding (I frames a and i) at regular intervals and, at other times, performs inter-frame coding for each of P frames (inter-frame coded frames, b - h, j -) with reference to the immediately preceding frame to remove temporal redundancy. In the following discussion, a frame coded in the intra-frame coding method is referred to as an I frame, while a frame coded in the inter-frame coding method is referred to as a P frame.

On the other hand, the method that employs only intra-frame coding has been used as a still picture coding method such as that is adopted by Joint Photographic Coding Experts Group (JPEG). This method performs intra-frame coding on all the frames, as shown in Fig. 3.

The method proposed by Recommendation H.261, which performs the inter-frame coding of each frame by referencing the immediately preceding frame, requires that all the frames be transmitted in the correct sequence. For a telephone line or an ISDN line over which data is transmitted after a connection with a partner is established, data reaches the partner without loss and in the correct sequence. However, for an Ethernet LAN or an ATM network in which data is divided into small units (called packets or cells) before transmission, there is a possibility that packets are lost or transmitted in an incorrect sequence.

In general, networks employ a protocol (for example, TCP : Transmission Control Protocol) in which the transmitting device sends packets with attached serial numbers, and the receiving device rearranges the packets in the correct sequence, confirms their arrival, and sends requests for the retransmission of non-arriving packets back to the transmitting device in order to deal with these problems and increase network reliability.

However, when network operation is unstable and packets are dropped frequently, retransmission under this type of protocol can cause large cumulative delays to build up, which is inappropriate for the real-time transmission of moving pictures. In some cases, it is preferable to display new data, even if skipping of a frame, rather than retransmitting old data, especially when new data can be displayed immediately.

Broadcasting and multicasting are schemes which send data to a plurality of sites at one time. However, when packet dropout occurs during transmission of a packet to one of the sites, the above protocol requires that the same packet be sent even to those sites which have received the packet successfully, significantly increasing the network load. Broadcasting and multicasting are therefore performed using a protocol that does not re-transmit a packet, such as the User Datagram Protocol (UDP); as a result, the probability of packet dropout increases.

In wireless networks, the data error rate or data drop-out rate is high not only in packet transmission but also in established line transmission due to fading and so forth. In addition, when the errors exceed the error-correcting capability of the receiving device, some pieces of data are sometimes discarded to receive other pieces of data successfully. Data dropouts in wireless networks therefore tend to be larger than in wire networks.

Another problem is that the processing speed of the sending device is not always equal to that of the receiving device. For example, decoding all the frames on a slower receiving device would put much frame data in the wait state, causing long delays. This requires the receiving device to intentionally skip frames. However, when there is no decoding data for a frame preceding the current frame, as in the inter-frame coding method according to the prior art, the current frame cannot be decoded. Hence, this prevents free skipping of frames.

Fig. 4 shows an example of frame dropout that may occur during transmission of frames according to the protocol proposed by Recommendation H.261. When frame e is dropped out or cannot be decoded because of slow processing, the P frames (f, g, h) cannot be decoded until the next I frame, i, is received.

Thus, in order to send all the frames successfully in a network in which frame dropout or frame skipping occurs frequently, intra-frame coding such as JPEG is performed, instead of inter-frame coding, for all the frames. For example, even when frame e is dropped out in the JPEG coding shown in Fig. 5, the next and the following frames may be decoded successfully. However, the problems with this method, which does not use inter-frame coding, are that there is temporal redundancy, whereby coding and decoding are inefficient, thereby leading to necessity of transmitting a large amount of data.

Thus, there has been a desire for a coder and decoder which decodes P frames without having to wait for the next I frame and which prevents coding efficiency from being decreased even in an environment in which there is a possibility that frames are dropped out or skipped.

EP-A-0763 944 discloses a picture coder decoder system using both intra-frame and inter-frame coding. The receiving device decodes the frames and sends acknowledge signals to the transmitting device. The transmitting device selects the reference frame employed in inter-frame coding based on these acknowledgement signals.

US-A-4 901 313 discloses an information system comprising a master station for transmitting a frame to a plurality of slave stations. The master station comprises means for dividing the plurality of slave stations into groups and resending a frame to the slave station of a particular group if the number of slave station in that group that haven't successfully received a frame exceeds a predetermined threshold value selected for the group.

US-A-5 457 808 discloses a network between a transmitting station and a plurality of receiving stations wherein an arrangement allows the transmitting stations to locate receiving stations that failed to receive a portion of a multicast signal such that the portion can be retransmitted to the failing stations.

US-A-4 422 171 discloses a method and system for transmitting a plurality of frames of digital data between a source device and a destination device wherein the destination device stores a list of all successfully received frames since the last failed frame decoding and regularly sends the updated list to the source device such that the source device can determine which frames to retransmit and which frames to delete from memory.

### SUMMARY OF THE INVENTION

The object of the present invention is to provide a picture coder system capable of transmitting pictures efficiently.

According to the invention there is provided a picture coder system including a picture coder coding a plurality of frames of a picture based upon a reference frame in an inter-frame coding mode, and a plurality of picture decoders for decoding the plurality of frames based upon the reference frame in the inter-frame coding modem, wherein each of the picture decoders comprise notification means for notifying the picture coder of reception results of the picture decoder, and the picture coder comprises: reference frame selection means for determining which frame of the plurality of frames serves as the reference frame characterised by the picture coder further comprising reception capability estimation means for estimating a decoding capability of each picture decoder by calculating the average frame dropout probability of the picture decoder based on accumulated past reception results thereof, target device selecting means for selecting from the plurality of picture decoders at least one picture decoder capable of receiving a given frame of the plurality of frames, based upon the estimated capability of the plurality of picture decoders; the reference frame selection means being configured to select the most commonly received frame of the at least one selected picture decoder as said reference frame, based on the past reception results of said at least one selected picture decoder; and transmission means for transmitting the given frame to the at least one selected picture decoder.

In one embodiment of the invention, a picture decoder of the plurality of picture decoders is configured to discard the given frame if the picture decoder is not one of the at least one selected picture decoders.

The invention also includes a picture coder as claimed in claim 9.

### BRIEF DESCRIPTION OF THE DRAWINGS

The present invention will be understood more fully from the detailed description and the accompanying drawings below of the preferred embodiments of the invention.

In the drawings:
Fig. 1 is a functional block diagram of the moving-picture coder of the first embodiment.
Fig. 2 shows an example of the coding method according to the Recommendation H. 261.
Fig. 3 shows an example of the coding method according to JPEG.
Fig. 4 shows an example of coding according to Recommendation H.261 in which frames are dropped out during coding.
Fig. 5 shows an example of coding according to JPEG in which frames are dropped out during coding.
Fig. 6 is a functional block diagram showing the moving-picture decoder of the first embodiment.
Fig. 7 shows an example of picture coding immediately after the start of multipoint transmission.
Fig. 8 shows an example of picture coding after a specified period time has elapsed since the start of multipoint transmission.
Fig. 9 shows an example of frame dropout during multipoint transmission.
Fig. 10 shows an example of multipoint transmission in which two receiving devices are not synchronized in the reception timing.
Fig. 11 shows another example of multipoint transmission in which two receiving devices are not synchronized in the reception timing.
Fig. 12 is a functional block diagram showing the moving-picture coder of the second embodiment.
Fig. 13 shows an example of moving-picture coding during multipoint transmission.
Fig. 14 shows an example of frame dropout during multipoint transmission.
Fig. 15 is a functional block diagram showing the moving-picture coder of the third embodiment.
Fig. 16 is a functional block diagram showing the moving-picture decoder of the third embodiment.
Fig. 17 shows the target device table.
Fig. 18 is an example of picture coding in which the propagation delay is large.
Fig. 19 is an example of picture coding in which a frame is deleted too early.
Fig. 20 is a functional block diagram showing the moving-picture coder of the fourth embodiment.
Fig. 21 is an example of weights assigned to the entries of the target device table.

### DESCRIPTION OF THE PREFERRED EMBODIMENTS

Referring to the attached drawings, there is shown the first embodiment according to this invention that is applied to the multipoint transmission of moving pictures.

### <First embodiment>

In the multipoint transmission mode, a sending device of the transmission system in this embodiment uses the decoding status signal (hereinafter, referred to as acknowledgment signal), which is sent back from each receiving device to indicate that a frame has been received normally (or abnormally), to estimate the receiving capability of the receiving device. If the sending device finds that the receiving devices differ in the receiving capability, it selects those receiving devices capable of receiving the next frame before sending it, and selects and updates the reference frame accordingly.

A receiving device of the transmission system in this embodiment does not decode coded data not destined therefor and, when the user requests that the receiving capability of the device be changed, sends the request to the sending device.

That is, the transmission system in this embodiment updates a reference frame according to the capability of the receiving devices.

The following explains the configuration of a sending device and a receiving device of this transmission system.

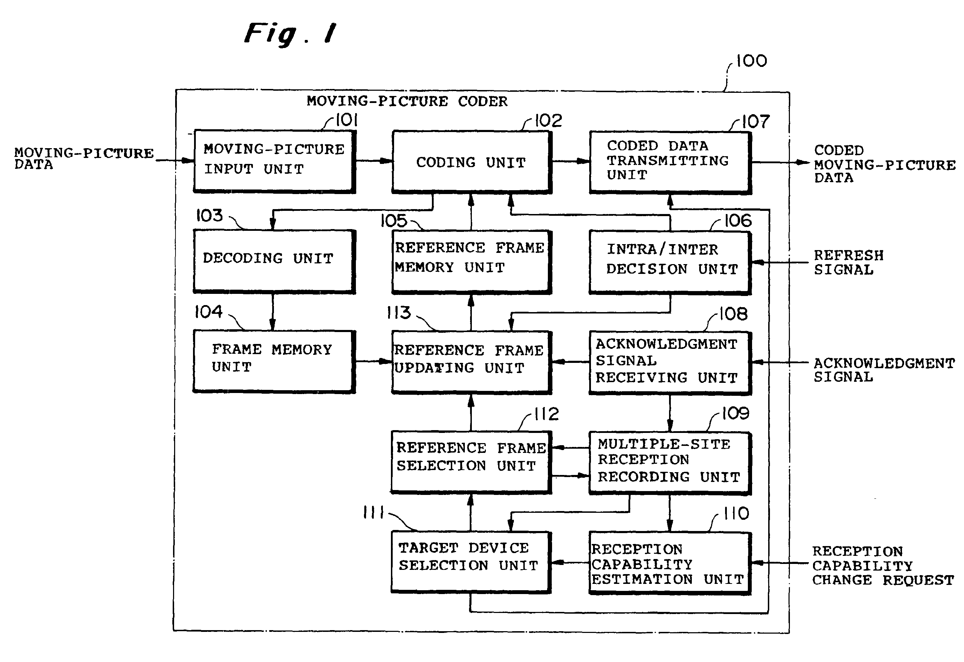

Fig. 1 is a functional block diagram of the moving-picture coder 100 used as a sending device of the transmission system in this embodiment.

A moving-picture input unit 101 passes moving-picture data from an input source, such as a camera, to a coding unit 102, one frame at one time.

The coding unit 102 codes inputted frame data, and passes coded data to a decoding unit 103 and a coded data transmitting unit 107. When coding, the coding unit 102 switches processing between intra-frame coding and inter-frame coding according to an instruction from a intra/inter decision unit 106, where "infra" refers to intra-frame coding and "inter" refers to inter-frame coding. When the coding unit 102 performs inter-frame coding, it references frame data stored in a reference frame memory unit 105.

The decoding unit 103 decodes coded data and writes decoded data, as well as frame numbers, into frame memory unit 104.

The frame memory unit 104 memorizes data for each frame. Each time a reference frame is updated by a reference frame updating unit 113, unnecessary data is cleared.

The reference frame memory unit 105, which contains reference frame data for use in inter-frame coding, is updated by the reference frame updating unit 113.

The intra/inter decision unit 106 selects which coding to use: intra-frame coding or inter-frame coding. Ordinarily, intra-frame coding is selected at regular intervals (e.g., once every thirty frames) while, at other times, inter-frame coding is selected. When the intra/inter decision unit 106 receives a refresh signal from a receiving device (moving-picture decoder 200 described later), it forces intra-frame coding and notifies implementation of the intra frame coding to the coding unit 102 and reference frame updating unit 113.

The coded data transmitting unit 107 sends coded moving-picture data to a plurality of receiving devices (moving-picture decoder 200). The coded data transmitting unit 107 multiplexes control information, such as an intra/inter flag or a reference frame number, as well as sending device information and receiving device information as necessary, onto the data. During multipoint transmission, the coded data transmitting unit 107 sends all the data to all the receiving devices. It may send data to selected devices when a target device selection unit 111 has selected some receiving devices. It may also multiplex target device information onto data.

An acknowledgment signal receiving unit 108 receives positive acknowledgment signal, which indicates that which frames have been decoded, from the receiving device (moving-picture decoder 200), and passes the numbers of the acknowledged frames to the reference frame updating unit 113. During multipoint transmission, the acknowledgment signal receiving unit 108 passes that information to a multiple-site reception recording unit 109.

The multiple-site reception recording unit 109 stores data on the reception result of each receiving device, including which frames each receiving device has received or a propagation delay from the time coded data is received to the time the acknowledgment signal is received. It passes recorded data to a reception capability estimation unit 110, target device selection unit 111, and reference frame selection unit 112. Note that, when the reference frame selection unit 112 selects a frame all the receiving devices have already received, the old data preceding that frame may be cleared or saved for s specified period.

The reception capability estimate unit 110 calculates the average frame dropout probability of each receiving device based on the past reception result recorded in the multiple-site reception recording unit 109 to estimate the reception capability (frame rate or network propagation delay, etc.,), and passes the estimate result to the target device selection unit 111. The capability estimate may be made either once at a specified period of time after the start of communication or one or more times at a specified interval if the reception capability or network status is variable. When a reception capability change request is sent from the receiving device (moving-picture decoder 200), the reception capability estimate unit 110 makes a reception capability estimate according to the request. However, when a reception capability change request from the receiving device is difficult to implement, information to that effect may sent back to the receiving device with no capability change.

The target device selection unit 111 selects the receiving devices capable of receiving the next frame, based on the reception capability estimate made by the reception capability estimate unit 110 using the result data recorded in the multiple-site reception recording unit 109. Normally, all the devices are assumed to be capable of receiving the next frame. However, when the receiving capability apparently differs among receiving devices and, therefore, some devices are assumed not to be able to receive it, the target device selection unit 111 selects those receiving devices capable of reception, and passes information on the selected devices to the reference frame selection unit 112 and the coded data transmitting unit 107.

The reference frame selection unit 112 selects the most commonly- received frame as the reference frame, based on the reception results of the devices selected by the target device selection unit 111. The reference frame selection unit 112 passes the selected frame number to the reference frame updating unit 113.

The reference frame updating unit 113 updates the reference frame memory, responsive to the instructions received from the intra/inter decision unit 106, acknowledgment signal receiving unit 108, and reference frame selection unit 112. Upon receiving an intra-frame coding instruction from the intra/inter decision unit 106, the reference frame updating unit 113 copies the data of the current frame from the frame memory unit 104 to the reference frame memory unit 105 and deletes all the frame data from the frame memory unit 104. Upon receiving a frame number from the acknowledgment signal receiving unit 108, the reference frame updating unit 113 copies the frame data with that number from the frame memory unit 104 to the reference frame memory unit 105 and deletes frame data up to and including the frame with that number from the frame memory unit 104. During multipoint transmission, the reference frame updating unit 113 copies the frame data with that number from the frame memory unit 104 to the reference frame memory unit 105, responsive to the instruction from the reference frame selection unit 112; at this time, it deletes frame data up to and including the frame with that number only when target devices are not selected.

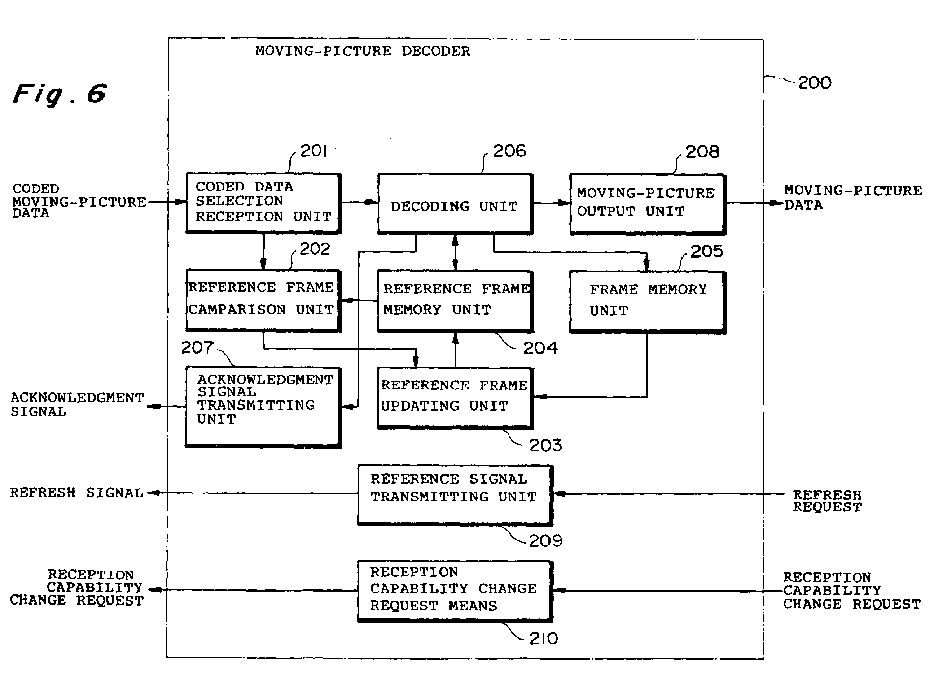

Fig. 6 is a functional block diagram showing the configuration of the moving-picture decoder 200 that is used as a receiving device of the transmission system in this embodiment.

A coded data selection reception unit 201 receives coded moving-picture data from the sending device (moving-picture coder 100), and passes the received coded data, such information as the intra/inter flag and reference frame number multiplexed on the data and, as necessary, multiplexed sending device information and so forth to a decoding unit 206. It also passes the reference frame number to a reference frame comparison unit 202. When target device information is multiplexed during multipoint transmission, it sends that information to the reference frame comparison unit 202. When the device is not a target device, this unit discards the coded data and does not perform decoding for that frame.

The reference frame comparison unit 202 compares the received reference frame number with the reference frame number of its own that is stored in a reference frame memory unit 204. if they mismatch, the reference frame comparison unit 202 sends a reference frame update request and the new reference frame number to a reference frame updating unit 203. If there is target device information, the unit also sends it to the reference frame updating unit 203.

Upon receiving an update request from the reference frame comparison unit 202, the reference frame updating unit 203 reads the frame data of the new reference frame number from a frame memory unit 205 and writes the data and the frame number into the reference frame memory unit 204. At this time, if the target devices are not selected, the reference frame updating unit 203 deletes old frame data from the frame memory unit 205.

The reference frame memory unit 204, which contains the reference frame data for use in inter-frame coding, is updated by the reference frame updating unit 203 and the decoding unit 206.

The frame memory unit 205 contains the decoded frame data.

The decoding unit 206 decodes entered coded data and sends the decoded data to a moving-picture output unit 208. For an I frame, the decoding unit 206 writes the decoded data and the frame number into the reference frame memory unit 204 to update the reference frame; for a P frame, the decoding unit 206 references the data in the reference frame memory unit 204 for decoding and writes the decoded data and the frame number into the frame memory unit 205. When the decoding is done successfully, the decoding unit 206 passes the frame number to an acknowledgment signal transmitting unit 207.

The acknowledgment signal transmitting unit 207 sends an acknowledgment signal to the sending device (moving-picture coder 100) to indicate which frame has been decoded. It also sends the frame number received from the decoding unit 206.

The moving-picture output unit 208 outputs the decoded data received from the decoding unit 206 to the monitor.

A refresh signal transmitting unit 209 receives a refresh signal request from the user and sends the corresponding refresh signal to the sending device (moving-picture coder 100).

Upon receiving a reception capability change request from the user requesting that the reception capability of the receiving device estimated by the sending device be changed, reception capability change request means 210 send the reception capability change request to the sending device (moving-picture coder 100). When the user request exceeds the capability of the receiving device, the reception capability change request means 210 inform the user of the condition and do not send the change request.

The following explains how the moving-picture coder 100 and the moving-picture decoder 200 operate during multipoint transmission. The following divides the discussion of the operation into two: the operation performed for some time after the start of communication and the subsequent operation. In this discussion, assume that the two moving-picture decoders 200, A and B, are connected to the moving-picture coder 100.

First, the operation after the start of communication is explained. In this period of operation, the moving-picture coder 100 does not know the reception capability of the receiving devices connected to it. During this period, the moving-picture coder 100 checks the acknowledgment signal sent from each of receiving devices A and B, and updates the reference frame only when both receiving devices A and B have received the picture successfully.

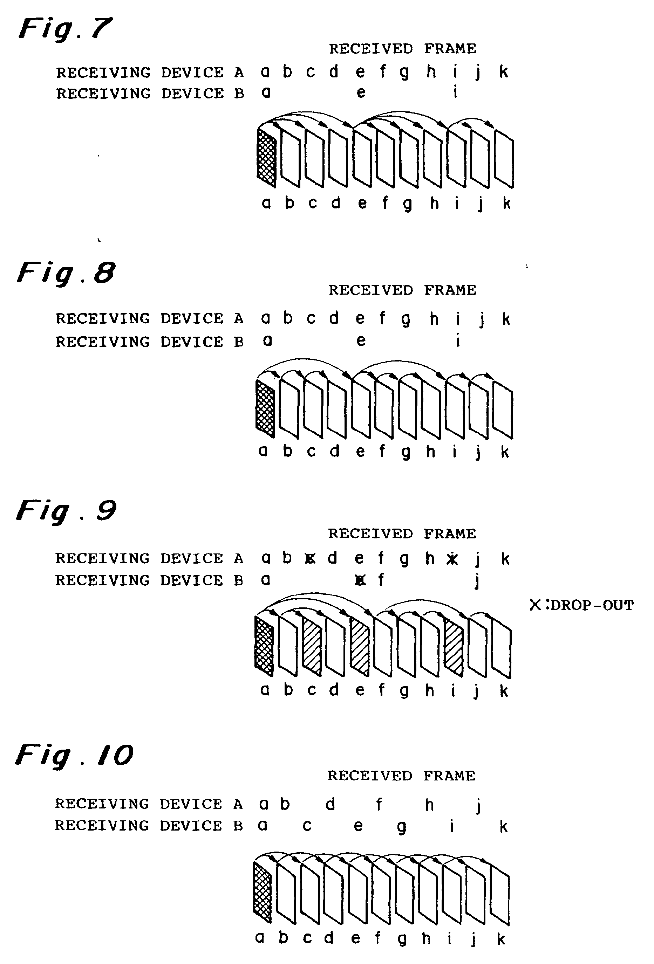

That is, as shown in Fig. 7, the moving-picture coder 100 updates the reference frame for frames a, e, and i, and performs coding for other frames b, c, d, f, g, h, j and k with reference to the reference frame at that point. In Fig. 7, the moving-picture coder 100 performs coding for frames b, c, and d with reference to frame a; frames f, g, and h with reference to frame e; and so forth.

Thus, in this period of frame coding, the reference frame is updated according to receiving device B that is relatively low in the reception capability.

This eliminates the need for performing intra-frame coding for all the frames against frame dropout and, at the same time, allows the P frames to be decoded without having to wait for the subsequent I frame, thus providing higher efficiency as compared with that of the conventional system. However, note that when receiving device A and receiving device B are largely out of synchronization in the reception timing or when the two devices differ largely in the reception capability, it is likely that the reference frame is updated less frequently. There're, continued use of this method may not provide a significant increase in efficiency.

Therefore, the reception result accumulated for some time after the start of communication is used. The estimate of the reception capability of receiving devices A and B, based on the reception result, is used to modify the frame coding method.

The reception capability estimate unit 110 is used to estimate the reception capability. In Fig. 7, the reception capability estimate unit 110 estimates that receiving device A can receive almost every frame but that receiving device B can not receive, on the average. only one frame out of four frames that are sent to it.

Based on this result, the target device selection unit 111 judges that, after receiving-device B receives frame e, it cannot receive frames until frame i which is four frames ahead is sent. And, for frames f, g, and h that come before frame i, the target device selection unit 111 selects only receiving device A as the device which performs the coding of those frames.

That is, as shown in Fig. 8, the reference frame is updated for each frame for receiving device A which receives every frame. And, the reference frame is set to frame e only when frame i, which is thought to be received by both receiving devices, is coded.

Thus, the coding efficiency of receiving device A, which is lower than when only receiving device A is connected but is higher than that of receiving device B, becomes still higher as compared with that for a period after the start of communication.

Fig. 9 shows a dropout that may occur during this coding. When a dropout occurs (frames c, e, and i in the figure), the acknowledgment signal receiving unit 108 detects it, and the coding of the next frame is performed without updating the reference frame. This minimizes the degradation of picture quality, if any.

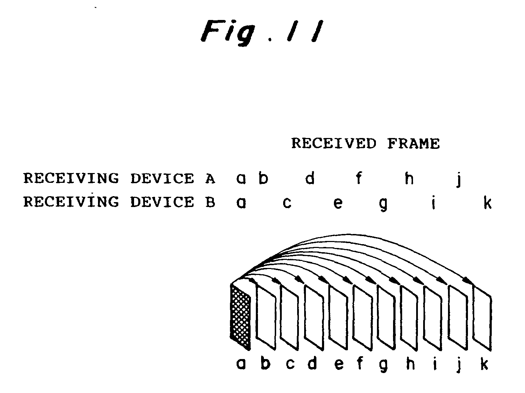

Fig. 10 shows an example of coding when both receiving devices do not synchronize in the reception timing. In this case, because each frame is made to correspond to a receiving device, the reference frame of each receiving device is updated. Therefore, the coding efficiency is higher than when only the frame received by both receiving devices is used as a reference frame (Fig. 11).

The above configuration, in which the reference frame is updated according to the reception result of each receiving device, makes it possible for the receiving device to decode all the frames without having to wait for the next I frame to be sent, increasing coding efficiency.

In addition, the sending device, with a function which estimates the reception capability of each receiving device, enables frame coding and data transmission best suited for each receiving device.

This is most significant in multipoint transmission. That is, in a configuration in which a plurality of receiving devices, each with its own reception capability, are connected to one communication line, a high capability receiving device can maintain high coding efficiency without being affected by a low capability receiving device.

In addition, even when a plurality of receiving devices do not synchronize in the reception timing, the reference frame of each device may be updated independently and therefore high coding efficiency is ensured.

### <Second embodiment>

Next, the following explains the second embodiment. The second embodiment differs from the first embodiment in that, when a plurality of receiving devices receive picture data from the sending device, the second embodiment has means for grouping those receiving devices with an equal reception capability and means for sending a frame to the receiving devices in the same group in the same timing in order to reduce the transmission processing load.

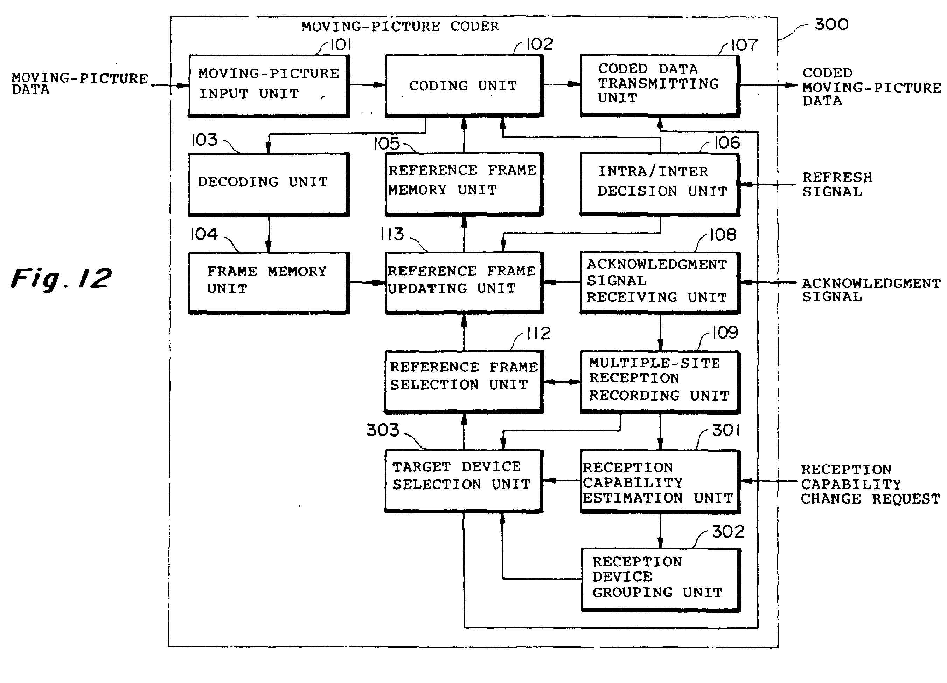

Fig. 12 is a functional block diagram showing an example of the moving-picture coder 300 in the second embodiment. In Fig. 12, the same components as those shown in Fig. 1 have the corresponding numbers used in Fig. 1. The description of those components is omitted.

A reception capability estimate unit 301, functionally equivalent to the reception capability estimate unit 110 in the first embodiment, passes the estimate result to a target device selection unit 303 and, at the same time, to a reception device grouping unit 302.

The reception device grouping unit 302 divides the receiving devices into a plurality of groups by capability according to the reception capability estimated by the reception capability estimate unit 301, and passes the grouped result to the target device selection unit 303.

The target device selection unit 303, functionally equivalent to the target device selection unit 111 in the first embodiment, selects the receiving devices in the same group in the same timing, based on the grouping result of the reception device grouping unit 302 This ensures that the coded data is always sent to the receiving devices in the same group at the same time.

The configuration of the a receiving device, that is, a moving-picture decoder, is the same as that used in the first embodiment.

A decrease in the coding efficiency caused by the two receiving devices not synchronized may be avoided by the moving-picture coder 100 in the first embodiment. However, the operation of the moving-picture coder 100 is somewhat redundant because it repeats coding and transmission alternately in the same timing.

Thus, the moving-picture coder 300 in the second embodiment groups the receiving devices A and B to send coded data in the same timing.

This eliminates the redundancy of the sending device, thereby increasing processing efficiency.

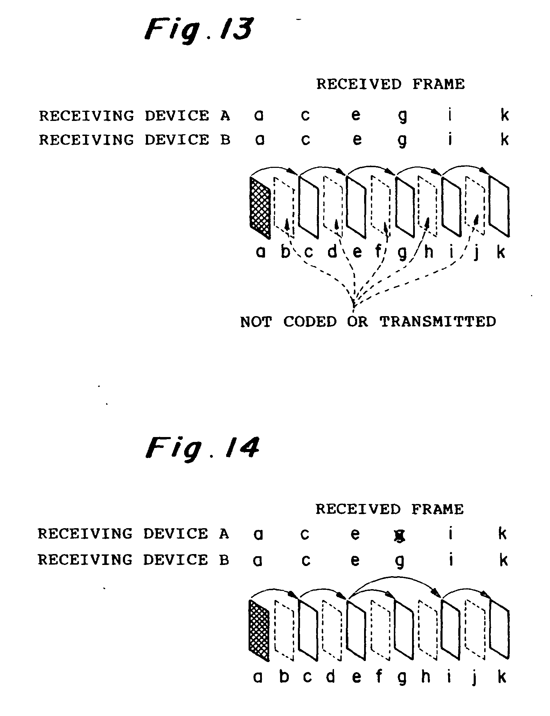

Fig. 14 shows an example of frame dropout. In this case, even when a dropout occurs, the picture quality is not degraded much because frame coding is performed without updating the reference frame. In this embodiment, the receiving devices in the same group are treated in the same manner.

As described above, the second embodiment provides the same advantage as the first embodiment as well as the following two advantages which are specific to the second embodiment. First, grouping the receiving devices by reception capability allows coding and transmission to be synchronized, eliminating processing redundancy. Second, grouping the devices by reception capability significantly reduces the number of combinations of devices during target device selection processing, making processing simple.

### <Third embodiment>

The third embodiment is described below. The third embodiment differs from the first embodiment in that the sending device has means for recording which receiving device used which frame data, stored in this sending device, as a reference frame, means for selecting an unnecessary frame from those frames each associated with one or more receiving devices, means for deleting selected frame data from frame memory, and means for sending the number of an unnecessary frame to the receiving device and in that the receiving device has means for receiving the number of an unnecessary frame and means for deleting the unnecessary frame. In this embodiment, frame data which may be used as reference data but which is already unnecessary is deleted according to the capability of the receiving device.

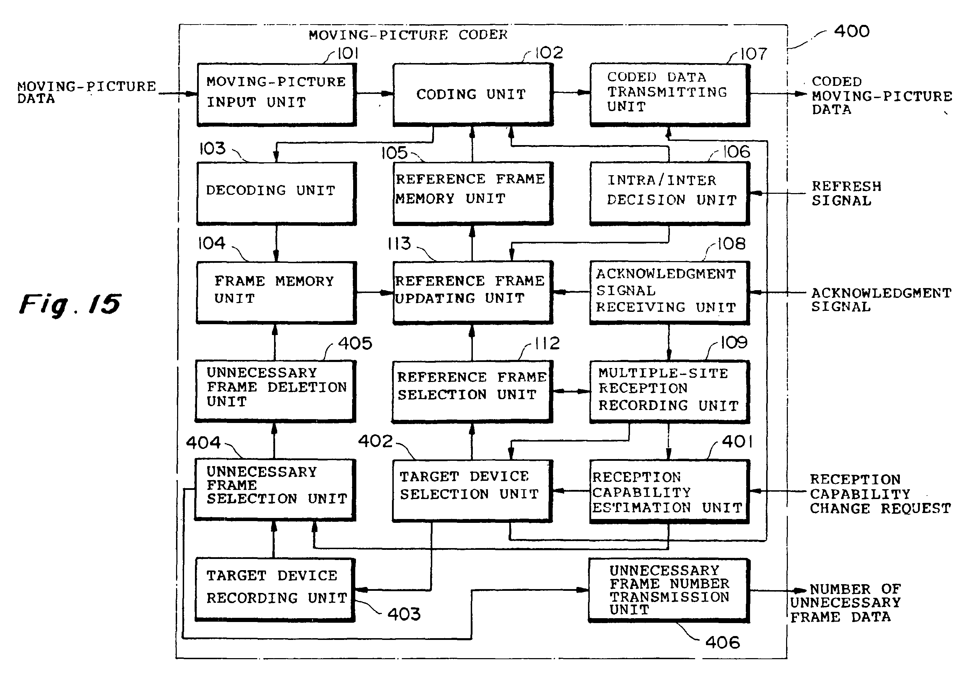

Fig. 15 is a functional block diagram showing an example of the moving-picture coder 400 in the third embodiment. In Fig. 15, the same components as those shown in Fig. 1 have the corresponding numbers used in Fig. 1. The description of those components is omitted.

A reception capability estimate unit 401, functionally equivalent to the reception capability estimate unit 110 in the first embodiment, passes the estimate result to a target device selection unit 402 and, at the same time, to a unnecessary frame selection unit 404.

The target device selection unit 402, functionally equivalent to the target device selection unit 111 in the first embodiment, passes selected target device data to the reference frame selection unit 112 and, at the same time, to a target device recording unit 403.

The target device recording unit 403 records which device used which frame data, stored in the frame memory unit 104, as a reference frame and passes recorded data to an unnecessary frame selection unit 404. Note that information on target devices may be stored in a special table or added to the header information of the frame memory unit 104.

Based on the reception capability, the unnecessary frame selection unit 404 selects from recorded frame data an unnecessary frame not to be used as a reference frame, and passes the number of the selected frame to an unnecessary frame deletion unit 405. If the receiving device is compatible with this function, the unnecessary frame selection unit 404 passes the number also to an unnecessary frame number transmission unit 406.

The unnecessary frame deletion unit 405 deletes unnecessary frame data from the frame memory unit 104 according to an instruction from the unnecessary frame selection unit 404.

The unnecessary frame number transmission unit 406 sends the number of unnecessary frame data to the receiving device as necessary.

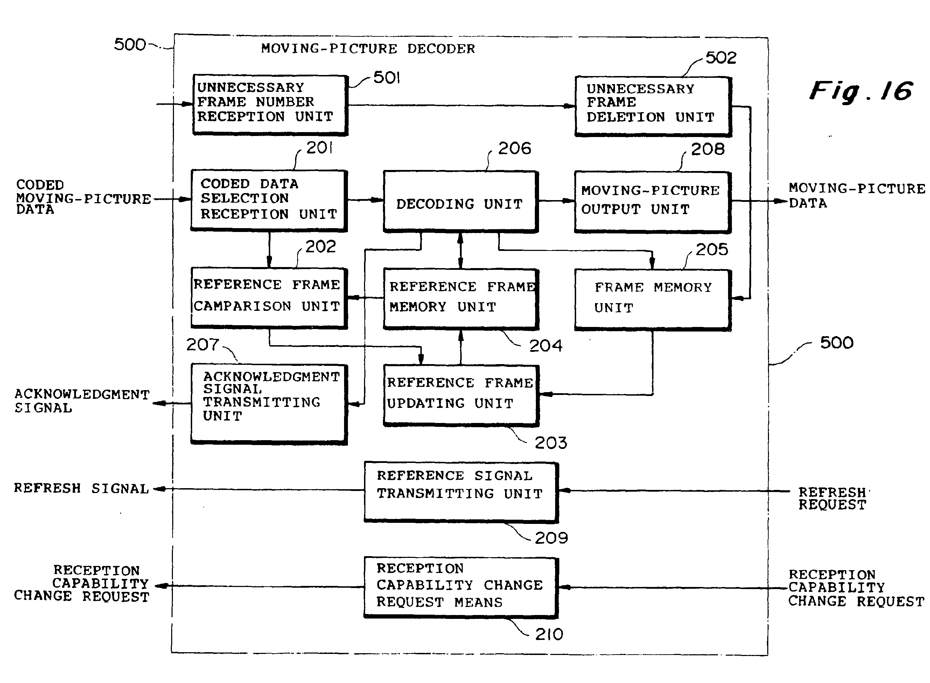

Fig. 16 is a functional block diagram showing an example of the moving-picture decoder 500 in the third embodiment. In Fig. 16, the same components as those shown in Fig. 6 have the corresponding numbers used in Fig. 6. The description of those components is omitted.

An unnecessary frame number reception unit 501 receives the number of unnecessary frame data from the unnecessary frame number reception unit 501 an necessary, and passes the received number to an unnecessary frame deletion unit 502.

The unnecessary frame deletion unit 502 deletes unnecessary data from the frame memory unit 205 as necessary.

The following explains an example of operation in the third embodiment with reference to the example used in the first embodiment:

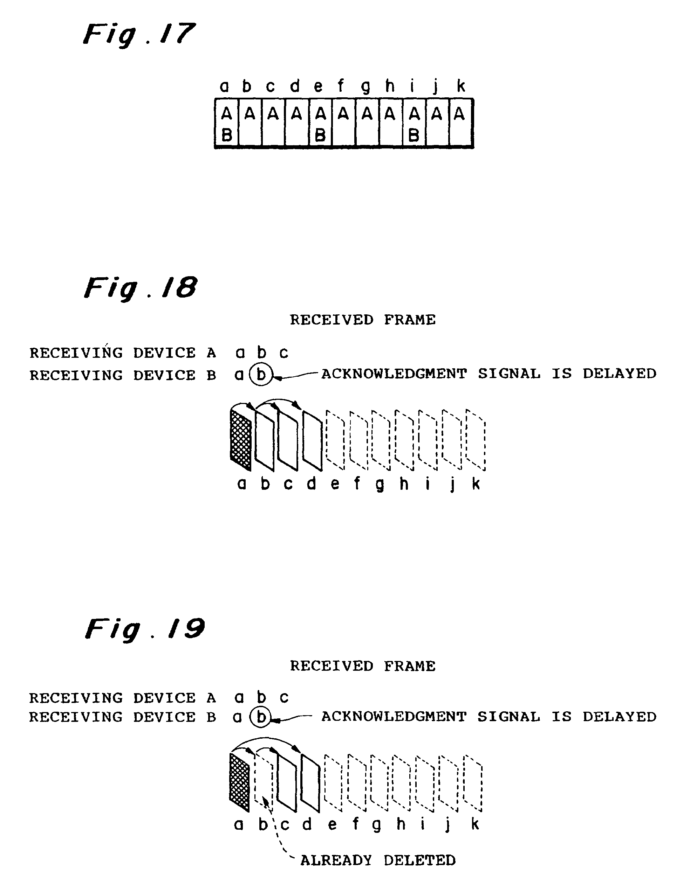

As shown in Fig. 17, the target device recording unit 403 records which receiving device used which frame as a reference frame. Based on this target device table, the unnecessary frame selection unit 404 selects an unnecessary frame.

For example, frame a, which is referenced by receiving devices A and B, cannot be deleted until frame e, which is also referenced by receiving devices A and B, is coded. On the other hand, frame b, which is referenced only by receiving device A, may be deleted after frame c, which is also referenced only by receiving device A, is coded.

Recording the devices selected in the past as in this embodiment allows a frame used by the same device to be serially deleted.

However, note that the following problem may develop when frame b is deleted. For example, assume that the acknowledgment signal of frame b is delayed and is received from receiving device B immediately before frame d is coded because of a large propagation delay on receiving device B. In this case, if the frame data is still available as in Fig. 18, frame d may be coded with reference to frame b. However, if frame c was deleted when frame c was coded as explained above, the reference frame must be returned to frame a as in Fig. 19 even if both receiving device A and receiving device B have received frame b.

To prevent this problem, the unnecessary frame selection unit 404 in this embodiment selects an unnecessary frame not only by referencing the target device table but also by considering the reception capability of each receiving device. That is, the unnecessary frame selection unit 404 deletes frame b considering the reception capability of receiving device B.

For example, when receiving device B receives one frame out of four frames as shown in Fig. 8, the unnecessary frame selection unit 404 selects frame b for immediate deletion. On the other hand, when the propagation delay of the acknowledgment signal of receiving device B is assumed to be large, the unnecessary frame selection unit 404 waits the maximum propagation delay time before selecting frame b for deletion.

As described above, the third embodiment provides the same advantage as the first embodiment as well as the following two advantages which are specific to the third embodiment. First, the reference frames selected for some devices may be serially deleted and, therefore, memory may be saved. Second, frames are not deleted too early because they are selected for deletion considering the reception capability.

### <Fourth embodiment>

The fourth embodiment is described below from the viewpoint of the difference between the fourth embodiment and the third embodiment. The fourth embodiment differs from the third embodiment in that the sending device has frame data weighting means for weighting frame data according to the target device and means for deleting frame data from frame memory according to the weight. When necessary frames must be deleted, for example, in a small-memory system, memory deletion is controlled so that the most important frame data is deleted last.

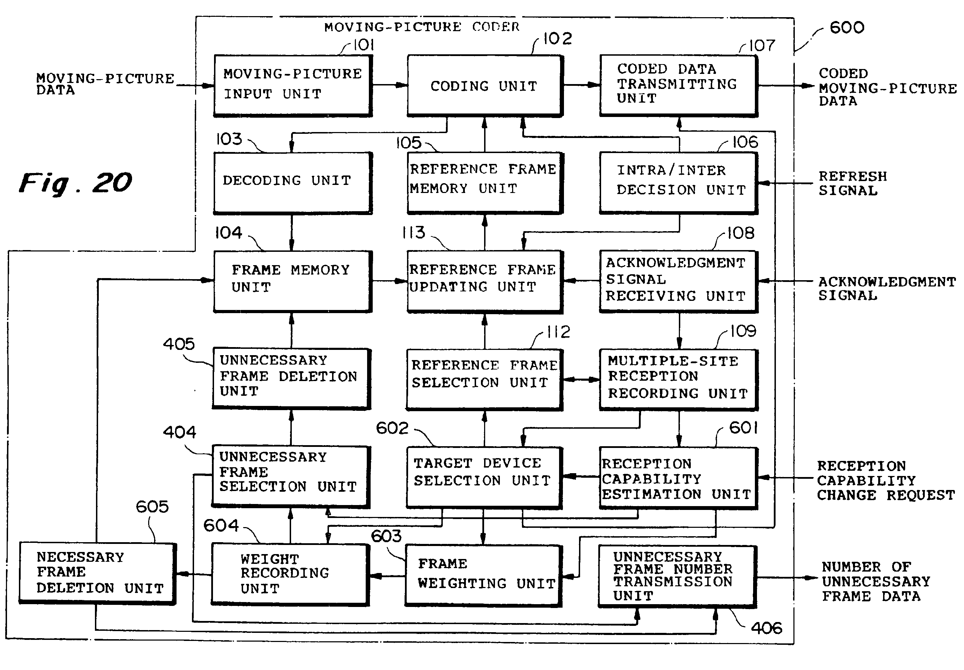

Fig. 20 is a functional block diagram showing an example of the moving-picture coder 600 in the second embodiment. In Fig. 20, the same components as those shown in Fig. 15 have the corresponding numbers used in Fig. 15. The description of those components is omitted.

A reception capability estimate unit 601, functionally equivalent to the reception capability estimate unit 401 in the third embodiment, passes the estimated reception capability to a target device selection unit 602 and the unnecessary frame selection unit 404 and, at the same time, to a frame weighting unit 603.

The target device selection unit 602, functionally equivalent to the target device selection unit 402 in the third embodiment, passes selected device data to the reference frame selection unit 112 and a weight recording unit 604 and, at the same time, to the frame weighting unit 603.

The frame weighting unit 603 calculates a weight indicating the importance of frame data according to the number and capability of selected target devices, and records the calculated weight in the weight recording unit 604.

The weight recording unit 604, functionally equivalent to the unnecessary frame selection unit 404 in the third embodiment, records the weight of each frame determined by the frame weighting unit 603. The weight recording unit 604 passes recorded data to the unnecessary frame selection unit 404 and, at the same time, to a necessary frame deletion unit 605.

The necessary frame deletion unit 605 deletes frame data from the frame memory unit 104, according to the frame weight data recorded in the weight recording unit 604, when the necessary frame data must be deleted. When the receiving device is compatible with this function, the necessary frame deletion unit 605 sends this deletion data to the unnecessary frame number transmission unit 406.

The receiving device, that is, moving-picture decoder, used in this embodiment is similar in configuration to the moving-picture decoder 500 used in the third embodiment.

When frame data must be deleted in a system where the frame memory is insufficient, the moving-picture coder 600 used in this embodiment allows the user to efficiently delete frame data with the least important frame first. The following explanation focuses on this point.

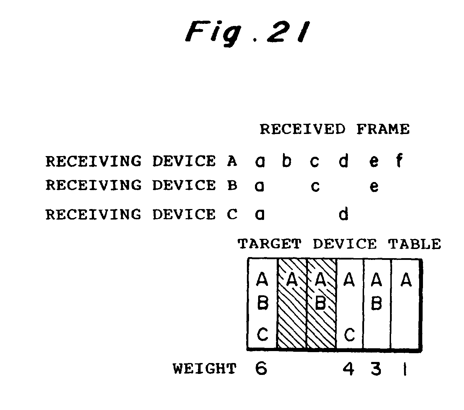

Fig. 21 shows an example of weight on each frame. In Fig. 21, receiving device A receives every frame, receiving device B every other frame, and receiving device C every third frame.

At this time, the moving-picture coder 600 creates a target device table based on the reception result, as in the third embodiment, and, based on this table, deletes a reference frame. In Fig. 21, the shaded frame data has been deleted assuming that it is no longer necessary.

The operation of the moving-picture coder 600 is explained below under the assumption described above. First, the moving-picture coder 600 puts weight on each receiving device. The weight of 1 is assigned to the receiving device with the highest reception capability, with a higher weight assigned to a device with lower capability considering the power or the frame rate. In Fig. 21. the weight of 1 is assigned to receiving device A, the weight of 2 to receiving device B, and weight of 3 to receiving device C.

Next, the moving-picture coder 600 calculates the total of the weights for each frame, which is the weight of a frame. The more the receiving devices, the larger the weight of the frame; the lower the capability of the receiving device, the larger the weight of the frame. This is because a device with a higher capability is likely to find an alternative frame.

At deletion time, frames are deleted in order of ascending weight and, among frames with an equal weight, in order of reception time.

Deleting frames according to this rule prevents an important frame from being deleted even if it is old. For example, in Fig. 21, if the frames are deleted in order of reception time without considering the weight, the frame selected for the three receiving devices, A, B, and C, is deleted first. If this happens, the frame cannot be referenced when coding is performed later for devices A, B, and C.

In contrast, even if the frame selected for receiving devices A and B or the frame selected for receiving devices A and C is deleted first according to this rule, the frame selected for receiving devices A, B, and C may be used as an alternative frame. This minimizes the effect of deletion.

As described above, the fourth embodiment provides the same advantage as the first and the third embodiments as well as the following two advantages which are specific to the fourth embodiment. First, deleting frames with the least important frame first provides the user with coding efficiency dependent on the amount of frame memory, giving him or her a picture quality best suited to the system. Second, the survival of the most important frame, which is received by all the receiving devices, minimizes the possibility of coding errors.

### <Other embodiments>

In the description of the third and fourth embodiments, the difference from the first embodiment is explained with the system configuration of the first embodiment as the base configuration. They may also be implemented with the system configuration of the second embodiment as the base configuration. The advantages in the second embodiment may be provided in each of the third and fourth embodiments.

In the third and fourth embodiments, the sending device judges that a frame is unnecessary and send the number of the frame to the receiving devices to cause them to delete the frame. It is to be understood that the invention is not limited to this configuration. That is, a receiving device may perform the same processing as the sending device to select an unnecessary frame.

In the above description, the reference frame is switched for a frame when a frame dropout occurs. It is to be understood that the invention is not limited to frame switching for a frame. For example, a frame may be divided into a plurality of groups, and the reference frame may be switched for each block by checking to see if each block is dropped out. A smaller block reduces dropouts or errors, increasing the reference frame update rate and coding efficiency.

In the above description, the reference frame updating unit 113 copies frame data from the frame memory unit 104 to the reference frame memory unit 105 during intra-frame coding. It is to be understood that the invention is not limited to this method. For example, the intra-frame coding request signal may be passed from the intra/inter decision unit 106 to the decoding unit 103 to write frame data from the decoding unit 103 directly into the reference frame memory unit 105 during intra-frame coding. In this case, copying processing may be omitted.

In the above description, the reference memory and the frame memory are provided separately and explained separately. It is to be understood that the invention is not limited to this method. That is, with frame data in memory, a reference frame may be addressed with a pointer and so forth pointing to its memory location. This method eliminates the need for copying data from the frame memory to the reference frame memory when the reference frame is updated; only the contents of the pointer need be changed.

In the above description, the acknowledgment signal is sent when a frame is received. It is to be understood that the invention is not limited to this method. That is, the acknowledgment signal may be sent from the receiving device to the sending device when a frame cannot be received. This method enables the sending device to perform coding without having to wait for the acknowledgment signal to arrive because it is usually not sent. When the acknowledgment signal, which indicates that a frame cannot be received, is received, coding is performed by returning the reference frame to the frame immediately preceding the frame not successfully received. In this case, although the receiving device cannot decode several frames following the frame not received, it can resume decoding because the data is switched immediately to the one referencing the received frame.

In the above description, a receiving device (that is, a moving-picture decoder) sends the acknowledgment signal upon termination of decoding. It is to be understood that the invention is not limited to this method. That is, the data validity check may be made when coded data is received in order to send the acknowledgment signal if the data is valid. This sends the acknowledgment signal sooner and reduces the propagation delay of the acknowledgment signal.

In the above description, multipoint transmission in which a plurality of receiving devices are connected to one sending device is explained. It is to be understood that this invention may also be applied to a one-to-one connection configuration in which a reception acknowledgment signal delay is caused by network congestion and the reference frame cannot be updated for each frame.

In the description, the moving-picture coder and the moving-picture decoder each are represented by functional blocks. Either a hardware unit or a software program with this function may be used to implement this invention.

Although the invention has been described as transmitting moving-picture data, it can be applied to any type of data including voice data or binary data.

Although the invention has been described as a transmitting system composed of moving-picture coders and moving-picture decoders, it can be applied to coders and decoders for storing picture or the like.

As described above, the coder according to this invention receives the coded-data reception result from a decoder, estimates the reception capability of the decoder based on the result, and updates the reference data on which prediction coding is to be based. This makes it possible for the coder to update reference data according to the reception capability of each decoder and to select reference data best suited for the transmission data, thus maintaining high coding efficiency.

In addition, when the decoder according to this invention receives a reception capability change request or when the reception capability of the decoder is changed, the decoder can send information on the change to the coder from which coded data is sent. This allows the coder to perform coding depending upon the change in capability of each decoder.

Thus, a transmission system composed of these coders and decoders ensures coding efficiency higher than that of the conventional system.

## Claims

1. A picture coder system including
a picture coder (100, 300, 400, 600) coding a plurality of frames of a picture based upon a reference frame in an inter-frame coding mode, and
a plurality of picture decoders (200, 500) for decoding the plurality of frames based upon the reference frame in the inter-frame coding mode,
wherein each of the picture decoders (200, 500) comprise notification means (207, 507) for notifying the picture coder of reception results of the picture decoder, and
the picture coder comprises:
reference frame selection means (112) for determining which frame of the plurality of frames serves as the reference frame **characterised by**
the picture coder (100, 300, 400, 600) further comprising
reception capability estimation means (110, 301, 401, 601) for estimating a decoding capability of each picture decoder by calculating the average frame dropout probability of the picture decoder (200, 500) based on accumulated past reception results thereof,
target device selecting means (111, 303, 402, 602) for selecting from the plurality of picture decoders at least one picture decoder capable of receiving a given frame of the plurality of frames, based upon the estimated capability of the plurality of picture decoders;
the reference frame selection means (112) being configured to select the most commonly received frame of the at least one selected picture decoder as said reference frame, based on the past reception results of said at least one selected picture decoder; and
transmission means (107) for transmitting the given frame to the at least one selected picture decoder.

2. A picture coder system as set forth in claim 1, wherein the past reception results includes which of the plurality of frames is actually decoded by the picture decoder (200, 500).

3. The picture coder system of claim 1 or 2, wherein a picture decoder of the plurality of picture decoders (200, 500) is configured to discard the given frame if the picture decoder is not one of the at least one selected picture decoders.

4. A picture coder system as set forth in any one of the preceding claims, wherein the picture coder further comprises grouping means (302) for grouping the plurality of picture decoders (200, 500) into a plurality of groups based on decoding capabilities; and
the transmission means (107) are configured to transmit to each of the plurality of groups, each given frame of the plurality of frames suited therefore.

5. A picture coder system as set forth in any one of the preceding claims, wherein the picture coder (400, 600) further comprises frame storage means (104) for storing a frame actually decoded by the plurality of picture decoders, based upon the accumulated past reception results;
history storage means (403) for storing history on the decoded frame; and
judging means (404) for judging whether the stored frame should be deleted or not based upon the history; and
frame deleting means (405) for deleting the frame judged to be deleted, from the frame storage means.

6. A picture coder system as set forth in claim 5, wherein the frame deleting means (405) deletes frames according to decoding capabilities.

7. A picture coder system as set forth in claim 5 or 6, where in the picture coder (600) further comprises weighting means (603) for putting weight on histories, and the frame deleting means (405) deletes frames in weight order.

8. A picture coder system as set in claim 7, wherein the weighting means (603) puts weight on the frames based upon decoding capabilities.

9. A picture coder (100, 300, 400, 600) operable to code a plurality of frames of a picture based upon a reference frame in an inter-frame coding mode and to transmit the plurality of frames for reception by a plurality of picture decoders (200, 500) which decode the plurality of frames based upon the reference frame in the inter-frame decoding mode, the picture coder comprising:
reference frame selection means (112) for selecting which frame of the plurality of frames serves as the reference frame **characterised by**
reception capability estimation means (110, 301, 401, 601) for estimating a decoding capabilities of the plurality of picture decoders (200, 500) by calculating the average frame dropout probability of the plurality of picture decoders based on accumulated past reception results notified from the picture decoders;
target device selection means (111, 303, 402, 602) for selecting at least one picture decoder (200, 500) from the plurality of picture decoder as being capable of receiving a given frame, based upon the estimated capabilities of the plurality of picture decoders;
the reference frame selection means (112) further being configured to select the most commonly received frame of the at least one selected picture decoder as said reference frame, based on the past reception results of said at least one selected picture decoder; and
transmission means (107) for transmitting the given frame to the at least one selected picture decoder.

10. A picture coder (100, 300, 400, 600) as set forth in claim 9, wherein the past reception results includes which of the plurality of frames is actually decoded by the picture decoder (200, 500).

11. A picture coder (300) as set forth in claim 9 or 10, further comprising grouping means (302) for grouping a plurality of picture decoders into a plurality of groups based upon decoding capabilities; and
wherein the transmission means (107) are further configured to transmitting to each of the plurality of groups, each given frame of the plurality of frames suited therefore.

12. A picture coder (400, 600) as set forth in any one of claims 9 to 11, wherein the picture coder further comprises frame storage means (104) for storing a frame actually decoded by a plurality of pictures decoders (200, 500) based upon the past reception results;
history storage means (403) for storing history information on the decoded frame;
judging means (404) for judging whether the stored frame should be deleted or not based upon the history; and
frame deleting means (405) for deleting the frame judged to be deleted, from the frame storage means.

13. A picture coder (400, 600) as set forth in claim 12, wherein the frame data deleting means (405) deletes the frame according to decoding capabilities.

14. A picture coder (600) as set forth in claim 12 or 13, further comprising weighting means (603) for putting weight on histories, wherein the frame deleting means (405) deletes frames in weight order.

15. A picture coder (600) as set forth in claim 14, wherein the weighting means (603) puts weight based upon decoding capabilities.

## Patentansprüche

1. Bildcodierersystem, das umfasst:
einen Bildcodierer (100, 300, 400, 600) zum Codieren mehrerer Rahmen eines Bildes anhand eines Referenzrahmens in einer Interrahmen-Codierungsbetriebsart und
mehrere Bilddecodierer (200, 500) zum Decodieren der mehreren Rahmen anhand des Referenzrahmens in der Interrahmen-Codierungsbetriebsart,
wobei jeder der Bilddecodierer (200, 500) eine Meldeeinrichtung (207, 507) umfasst, um dem Bildcodierer Empfangsergebnisse des Bilddecodierers zu melden, und
der Bildcodierer umfasst:
eine Referenzrahmen-Auswahleinrichtung (112) zum Bestimmen, welcher der mehreren Rahmen als der Referenzrahmen dient, **dadurch gekennzeichnet, dass**
der Bildcodierer (100, 300, 400, 600) ferner umfasst: ,
eine Empfangsfähigkeits-Schätzeinrichtung (110, 301, 401, 601) zum Schätzen einer Decodierungsfähigkeit jedes Bilddecodierers durch Berechnen der durchschnittlichen Rahmenausfallwahrscheinlichkeit des Bilddecodierers (200, 500) anhand akkumulierter vergangener Empfangsergebnisse hiervon,
eine Zielvorrichtungs-Auswahleinrichtung (111, 303, 402, 602) zum Auswählen wenigstens eines Bilddecodierers aus den mehreren Bilddocodierern, der einen gegebenen Rahmen der mehreren Rahmen empfangen kann, anhand der geschätzten Fähigkeit der mehreren Bilddecodierer;
wobei die Referenzrahmen-Auswahleinrichtung (112) so konfiguriert ist, dass sie anhand der vergangenen Empfangsergebnisse des wenigstens einen ausgewählten Bilddecodierers den am häufigsten empfangenen Rahmen des wenigstens einen ausgewählten Bilddecodierers als den Referenzrahmen auswählt; und
eine Sendeeinrichtung (107) zum Senden des gegebenen Rahmens zu dem wenigstens einen ausgewählten Bilddecodierer.

2. Bildcodierersystem nach Anspruch 1, bei dem die vergangenen Empfangsergebnisse enthalten, welcher der mehreren Rahmen durch den Bilddecodierer (200, 500) tatsächlich decodiert wird.

3. Bildcodierersystem nach Anspruch 1 oder 2, bei dem ein Bilddecodierer der mehreren Bilddecodierer (200, 500) so konfiguriert ist, dass er den gegebenen Rahmen verwirft, falls der Bilddecodierer keiner des wenigstens einen ausgewählten Bilddecodierers ist.

4. Bildcodierersystem nach einem der vorhergehenden Ansprüche, bei dem der Bildcodierer ferner eine Gruppierungseinrichtung (302) zum Gruppieren der mehreren Bilddecodierer (200, 500) in mehrere Gruppen anhand von Decodierungsfähigkeiten umfasst; und
die Sendeeinrichtung (107) so konfiguriert ist, dass sie zu jeder der mehreren Gruppen jeden gegebenen Rahmen der mehreren Rahmen, die hierfür geeignet sind, sendet.

5. Bildcodierersystem nach einem der vorhergehenden Ansprüche, bei dem der Bildcodierer (400, 600) ferner umfasst: eine Rahmenspeichereinrichtung (104) zum Speichern eines Rahmens, der von den mehreren Bilddecodierern tatsächlich decodiert wird, anhand der akkumulierten vergangenen Empfangsergebnisse;
Historienspeichereinrichtung (403) zum Speichern der Historie bezüglich des decodierten Rahmens; und
eine Beurteilungseinrichtung (404) zum Beurteilen, ob der gespeicherte Rahmen gelöscht werden sollte oder nicht, anhand der Historie; und
eine Rahmenlöscheinrichtung (405) zum Löschen des Rahmens, für den beurteilt wurde, dass er gelöscht werden soll, aus der Rahmenspeichereinrichtung.

6. Bildcodierersystem nach Anspruch 5, bei dem die Rahmenlöscheinrichtung (405) Rahmen in Übereinstimmung mit Decodierungsfähigkeiten löscht.

7. Bildcodierersystem nach Anspruch 5 oder 6, bei der der Bildcodierer (600) ferner eine Gewichtungseinrichtung (603) zum Versehen der Historien mit einem Gewicht umfasst und die Rahmenlöscheinrichtung (405) Rahmen in der Reihenfolge der Gewichte löscht.

8. Bildcodierersystem nach Anspruch 7, bei dem die Gewichtungseinrichtung (603) anhand der Decodierungsfähigkeiten die Rahmen mit Gewichten versieht.

9. Bildcodierer (100, 300, 400, 600), der so betreibbar ist, dass er mehrere Rahmen eines Bildes anhand eines Referenzrahmens in einer interrahmen-Codierungsbetriebsart codiert und die mehreren Rahmen sendet, damit sie von mehreren Bilddecodierern (200, 500) empfangen werden, die die mehreren Rahmen anhand des Referenzrahmens in der Interrahmen-Decodierungsbetriabsart decodieren, wobei der Bildcodierer umfasst:
eine Referenzrahmen-Auswahleinrichtung (112) zum Auswählen, welcher der mehreren Rahmen als der Referenzrahmen dient, **gekennzeichnet durch**
eine Empfangsfähigkeits-Schätzeinrichtung (110, 301, 401, 601) zum Schätzen von Decodierungsfähigkeiten der mehreren Bilddecodierer (200, 500) durch Berechnen der durchschnittlichen Rahmenausfallwahrscheinlichkeit der mehreren Bilddecodierer anhand von akkumulierten vergangenen Empfangsergebnissen, die von den Bilddecodierern gemeldet werden;
eine Zielvorrichtungs-Auswahleinrichtung (111, 303, 402, 602) zum Auswählen wenigstens eines Bilddecodierers (200, 500) aus den mehreren Bilddecodierern als einen Bilddecodierer, der einen gegebenen Rahmen empfangen kann, anhand der geschätzten Fähigkeiten der mehreren Bilddecodierer;
wobei die Referenzrahmen-Auswahleinrichtung (112) ferner so konfiguriert ist, dass sie den am häufigsten empfangenen Rahmen des wenigstens einen ausgewählten Bilddecodierers als den Referenzrahmen anhand der vergangenen Empfangsergebnisse des wenigstens einen ausgewählten Bilddecodierers auswählt; und
eine Sendeeinrichtung (107) zum Senden des gegebenen Rahmens zu dem wenigstens einen ausgewählten Bilddecodierer.

10. Bildcodierer (100, 300, 400, 600) nach Anspruch 9, bei dem die vergangenen Empfangsergebnisse enthalten, welcher der mehreren Rahmen durch den Bilddecodierer (200, 500) tatsächlich decodiert wird.

11. Bildcodierer (300) nach Anspruch 9 oder 10, der ferner umfasst:
eine Gruppierungseinrichtung (302) zum Gruppieren mehrerer Bilddecodierer in mehrere Gruppen anhand der Decodierungsfähigkeiten; und
wobei die Sendeeinrichtung (107) ferner so konfiguriert ist, dass sie zu jeder der mehreren Gruppen jeden der gegebenen Rahmen der mehreren Rahmen, die hierfür geeignet sind, sendet.

12. Bildcodierer (400, 600) nach einem der Ansprüche 9 bis 11, wobei der Bildcodierer ferner eine Rahmenspeichereinrichtung (104) zum Speichern eines von mehreren Bilddecodierern (200, 500) tatsächlich decodierten Rahmens anhand der vergangenen Empfangsergebnisse umfasst;
eine Historienspeichereinrichtung (403) zum Speichern von Historieninformationen bezüglich des decodierten Rahmens;
eine Beurteilungseinrichtung (404) zum Beurteilen, ob der gespeicherte Rahmen gelöscht werden sollte oder nicht, anhand der Historie; und
eine Rahmenlöscheinrichtung (405) zum Löschen des Rahmens, für den beurteilt worden ist, dass er gelöscht werden sollte, aus der Rahmenspeichereinrichtung.

13. Bildcodierer (400, 600) nach Anspruch 12, bei dem die Rahmendaten-Löscheinrichtung (405) den Rahmen in Übereinstimmung mit Decodierungsfähigkeiten löscht.

14. Bildcodierer (600) nach Anspruch 12 oder 13, der ferner eine Gewichtungseinrichtung (603) umfasst, die die Historien mit einem Gewicht versieht, wobei die Rahmenlöscheinrichtung (405) Rahmen in der Reihenfolge der Gewichte löscht.

15. Bildcodierer (600) nach Anspruch 14, bei dem die Gewichtungseinrichtung (603) anhand der Decodierungsfähigkeiten Gewichte verleiht.

## Revendications

1. Système de codeur d'image, comprenant :
un codeur d'image (100, 300, 400, 600) codant une pluralité de trames d'une image en fonction d'une trame de référence dans un mode de codage intertrame, et
une pluralité de décodeurs d'image (200, 500) pour décoder la pluralité de trames en fonction de la trame de référence dans le mode de codage intertrame,
dans lequel chacun des décodeurs d'image (20D, 500) comprend des moyens de notification (207, 507) pour indiquer au codeur d'image des résultats de réception du décodeur d'image, et
le codeur d'image comprend :
des moyens de sélection de trame de référence (112) pour déterminer quelle trame de la pluralité de trames sert de trame de référence, **caractérisé en ce que** :
le codeur d'image (100, 300, 400, 600) comprend de plus :
des moyens d'estimation de capacité de réception (110, 301, 401, 601) pour estimer une capacité de décodage de chaque décodeur d'image par calcul de la probabilité d'abandon de trame moyenne du décodeur d'image (200, 500) en fonction de résultats de réception passés accumulés de celui-ci,
des moyens de sélection de dispositif cible (111, 303, 402, 602) pour sélectionner parmi la pluralité de décodeurs d'image au moins un décodeur d'image susceptible de recevoir une trame donnée de la pluralité de trames, en fonction de la capacité estimée de la pluralité de décodeurs d'image ;
des moyens de sélection de trame de référence (112) qui sont configurés de façon à sélectionner la trame la plus couramment reçue du décodeur d'image sélectionné au nombre d'au moins un comme étant ladite trame de référence, en fonction des résultats de réception passés dudit décodeur d'image sélectionné au nombre d'au moins un ; et
des moyens de transmission (107) pour transmettre la trame donnée au décodeur d'image sélectionné au nombre d'au moins un.

2. Système de codeur d'image selon la revendication 1, dans lequel les résultats de réception passés comprennent celle de la pluralité de trames qui est actuellement décodée par le décodeur d'image (200, 500).

3. Système de codeur d'image selon la revendication 1 ou 2, dans lequel un décodeur d'image de la pluralité de décodeurs d'image (200, 500) est configuré de façon à rejeter la trame donnée si le décodeur d'image n'est pas l'un des décodeurs d'image sélectionnés au nombre d'au moins un.

4. Système de codeur d'image selon l'une quelconque des revendications précédentes, dans lequel le codeur d'image comprend de plus des moyens de groupage (302) pour grouper la pluralité de décodeurs d'image (200, 500) en une pluralité de groupes en fonction des capacités de décodage ; et
les moyens de transmission (107) sont configurés de façon à transmettre à chacun de la pluralité de groupes chaque trame donnée de la pluralité de trames appropriées à cet effet.

5. Système de codeur d'image selon l'une quelconque des revendications précédentes, dans lequel le codeur d'image (400, 600) comprend de plus des moyens de mémorisation de trames (104) pour mémoriser une trame actuellement décodée par la pluralité de décodeurs d'image, en fonction des résultats de détection passée accumulés ;
des moyens de mémorisation d'historique, (403) pour mémoriser un historique concernant la trame décodée ; et
des moyens d'estimation (404) pour estimer si la trame mémorisée devrait être effacée ou non en fonction de l'historique ; et
des moyens d'effacement de trame (405) pour effacer la trame dont il est estimé qu'elle devrait être effacée des moyens de mémorisation de trames.

6. Système de codeur d'image selon la revendication 5, dans lequel les moyens d'effacement de trame (405) effacent des trames en fonction des capacités de décodage.

7. Système de codeur d'image selon la revendication 5 ou 6, dans lequel le codeur d'image (600) comprend de plus des moyens de pondération (603) pour appliquer un poids aux historiques, et les moyens d'effacement de trame (405) effacent des trames par ordre de poids.

8. Système de codeur d'image selon la revendication 7, dans lequel les moyens de pondération (603) appliquent un poids aux trames en fonction des capacités de décodage.

9. Codeur d'image (100, 300, 400, 600) pouvant fonctionner de façon à coder une pluralité de trames d'une image en fonction d'une trame de référence dans un mode de codage intertrame et à transmettre la pluralité de trames pour la réception par une pluralité de décodeurs d'image (200, 500) qui décodent la pluralité de trames en fonction de la trame de référence dans le mode de décodage intertrame, le codeur d'image comprenant :
des moyens de sélection de trame de référence (112) pour sélectionner la trame de la pluralité de trames qui sert de trame de référence, **caractérisé par** :
des moyens d'estimation de capacité de réception (110, 301, 401, 601) pour estimer des capacités de décodage de la pluralité de décodeurs d'image (200, 500) par calcul de la probabilité d'abandon de trame moyenne de la pluralité de décodeurs d'image en fonction de résultats de réception passés accumulés indiqués par les décodeurs d'image ;
des moyens de sélection de dispositif cible (111, 303, 402, 602) pour sélectionner au moins un décodeur d'image (200, 500) parmi la pluralité de décodeurs d'image comme étant susceptible de recevoir une trame donnée, en fonction des capacités estimées de la pluralité de décodeurs d'image ;
les moyens de sélection de trame de référence (112) étant de plus configurés de façon à sélectionner la trame la plus couramment reçue du décodeur d'image sélectionné au nombre d'au moins un comme étant ladite trame de référence, en fonction des résultats de réception passés dudit décodeur d'image sélectionné au nombre d'au moins un ; et
des moyens de transmission (107) pour transmettre la trame donnée au décodeur d'image sélectionné au nombre d'au moins un.

10. Codeur d'image (100, 300, 400, 600) selon la revendication 9, dans lequel les résultats de détection passés comprennent celle de la pluralité de trames qui est actuellement décodée par le décodeur d'image (200, 500).

11. Codeur d'image (300) selon la revendication 9 ou 10, comprenant de plus des moyens de groupage (302) pour grouper une pluralité de décodeurs d'image en une pluralité de groupes en fonction des capacités de décodage ; et
dans lequel les moyens de transmission (107) sont de plus configurés de façon à transmettre à chacun de la pluralité de groupes chaque trame donnée de la pluralité de trames appropriées à cet effet.

12. Codeur d'image (400, 600) selon l'une quelconque des revendication 9 à 11, dans lequel le codeur d'image comprend de plus des moyens de mémorisation de trames (104) pour mémoriser une trame actuellement décodée par la pluralité de décodeurs d'image (200, 500), en fonction des résultats de détection passés ;
des moyens de mémorisation d'historique (403) pour mémoriser une information d'historique concernant la trame décodée ;
des moyens d'estimation (404) pour estimer si la trame mémorisée devrait être effacée ou non en fonction de l'historique ; et
des moyens d'effacement de trame (405) pour effacer la trame dont il est estimé qu'elle devrait être effacée des moyens de mémorisation de trames.

13. Codeur d'image (400, 600) selon la revendication 12, dans lequel les moyens d'effacement de données de trame (405) effacent la trame en fonction des capacités de décodage.

14. Codeur d'image (600) selon la revendication 12 ou 13, comprenant de plus des moyens de pondération (603) pour appliquer un poids aux historiques, les moyens d'effacement de trame (405) effaçant les trames par ordre de poids.

15. Codeur d'image (600) selon la revendication 14, dans lequel les moyens de pondération (603) rappliquent un poids en fonction des capacités de décodage.
